(19) Europäisches Patentamt

European Patent Office

Office européen des brevets

(11) **EP 0 966 237 B1**

(12) **FASCICULE DE BREVET EUROPEEN**

(45) Date de publication et mention
de la délivrance du brevet:
**17.12.2003 Bulletin 2003/51**

(51) Int Cl.⁷: **A61C 19/04**

(21) Numéro de dépôt: **98912548.9**

(22) Date de dépôt: **25.02.1998**

(86) Numéro de dépôt international:
**PCT/FR98/00371**

(87) Numéro de publication internationale:
**WO 98/037829 (03.09.1998 Gazette 1998/35)**

(54) **PROCEDE ET DISPOSITIF PERFECTIONNE DE MESURE ET DE LOCALISATION DE L'APEX D'UNE DENT**

VERFAHREN UND VORRICHTUNG ZUR MESSUNG UND ORTUNG DES ZAHNAPEX

METHOD AND IMPROVED DEVICE FOR MEASURING AND LOCATING A TOOTH APEX

(84) Etats contractants désignés:
**BE DE IT**

(30) Priorité: **25.02.1997 FR 9702572**

(43) Date de publication de la demande:
**29.12.1999 Bulletin 1999/52**

(73) Titulaire: **Heraud, Roger**
**33480 Castelnau de Médoc (FR)**

(72) Inventeur: **Heraud, Roger**
**33480 Castelnau de Médoc (FR)**

(74) Mandataire: **Thébault, Jean-Louis**
**Cabinet Thébault**
**111 cours du Médoc**
**33300 Bordeaux (FR)**

(56) Documents cités:
WO-A-95/13032        DE-A- 3 018 568
FR-A- 2 741 524        US-A- 3 993 044
US-A- 4 526 179

**Description**

La présente invention à trait à un procédé et à un dispositif perfectionné de localisation de l'apex d'une dent.

Plus précisément, l'invention vise à proposer un procédé et un dispositif de mesure en temps réel de la distance entre l'extrémité distale d'une électrode insérée dans le canal radiculaire d'une dent et l'apex dudit canal, cette mesure devant être insensible à une présence autre que la pulpe, dans ledit canal, de sang, de pus, de débris, ou d'eau, ou d'antiseptiques tel que le péroxyde d'hydrogène, chlorure de sodium ou l'hypochlorite de sodium.

La localisation de l'apex ou de la constriction apicale est importante dans la procédure de traitement du canal dentaire parce que le succés de celle -ci dépend de l'enlèvement total des tissus pulpaires.

A cet effet, le dentiste utilise une lime endocanalaire métallique qu'il glisse dans la racine et, par des mouvements de rotation et de va et vient, il gratte les parois du canal afin de le dépulper et descend de plus en plus profondément dans la racine, et ceci sans dépasser la constriction apicale, ce qui peut causer des désagréments pour le patient et provoquer un abcès.

Il est donc important de pouvoir localiser précisément l'apex de la racine à nettoyer.

Dans ce but, plusieurs procédés sont utilisés.

Le procédé le plus couramment utilisé consiste à insérer une lime dans le canal par approche successive et de controler avec une succession de cliché radio X pour mettre la lime en position sur l'apex.

Ensuite le dentiste règle la butée de la lime sur un repère cuspidien pour déterminer la profondeur canalaire.

Cette technique est inadéquate et indésirable de par la dose de rayonnements subit par le patient ou lors de canaux courbes ou d'apex latéral, ce qui est source d'erreurs de lecture et d'appréciation des clichés.

Un autre procédé (document US-A-5049 069) basé sur la découverte que la mesure de l'impédance électrique entre une électrode placée à l'apex et une électrode de référence placée dans la bouche du patient, donne une valeur constante quels que soient les apex et quels que soient les patients. Il a été établi qu'entre l'apex et un point le long du canal radiculaire, l'impédance était proportionnelle à la distance entre ledit point et l'apex sur quelques millimètres.

Ces procédés basé sur cette découverte ne sont pas fiables, car la mesure dépend des variations d'impédance au niveau de l'électrode de référence disposée dans la bouche du patient.

Ils sont réglés pour une mesure faite dans une pulpe saine et ils ne fonctionnent pas avec des milieux tel que hypochlorite, chlorure de sodium, sang, ect, car l' impédance du milieu est modifiée.

Un autre procédé plus fiable (décrit dans le document WO-A-9513032) fonctionnant avec des milieux canalaires connus à l'avance, utilisant les mesures d'impédances entre une électrode tel une lime insérée dans le canal dentaire et de deux autres électrodes de référence reliées à la lèvre du patient, permet d'éliminer les erreurs due aux variations des contacts de référence et donc d'augmenter la fiabilité de la mesure. Il peut mesurer dans le sang ou dans des milieux trés conducteurs tel que l'hypochlorite, en créant un décalage d'origine étalonné de la résistivité du milieu.

Un autre procédé (USA-5 080 586) et (USA-5 112 224) utilise deux mesures d'impédance à deux fréquences différentes par exemple 1kHz et 5kHz, entre une électrode tel une lime insérée dans la canal radiculaire et une électrode butant sur la muqueuse orale, les impédances n'ayant pas la même réponse en fréquence à l'approche de l'apex. Il est effectué une soustraction sur ces deux mesures. Cette différence à l'approche de l'apex donnera la mesure. Ce procédé muni d'une mise à zéro manuelle ou automatique de la sortie du soustracteur, par un bouton ou par une détection, lorsque la lime vient d'être insérée dans le canal, agissant sur un décalage mémorisé d'une des entrées du soustracteur, permet de déterminer le moment d'une remise à zero de la sortie. Une différence entre les impédances ayant des réponses en fréquence respectives devient à une valeur spécifiée, la position de l'orifice apical ( FR 2 668 701-A1).

Ce procédé nécessite une calibration pour chaque canal à mesurer, ce qui est peu pratique ou est une source d'erreurs en utilisation courante.

Un autre procédé (brevet USA-5 096 419) utilise deux mesures d'impédance à deux fréquences différentes par exemple 400hz et 8khz, entre une électrode tel une lime insérée dans la canal radiculaire et une électrode butant sur la muqueuse orale, les impédances n'ayant pas la même réponse en fréquence à l'approche de l'apex. Il est effectué un ratio sur ces deux mesures pour s'affranchir de la variation des impédances dùe aux milieux dans lesquels se trouve la lime dans le canal.

Ce procédé donne des erreurs lorsque le milieu devient isolant tel que le péroxyde d'hydrogène. En effet les réponses des deux fréquences ne sont plus tout à fait ratiométriques.

D'autres méthodes telles que décrites notamment dans les documents DE-A-3 018 568, US-A-3 993 044, US-A-4 526 179, FR-A-2 741 524 ne résolvent notamment pas le problème de s'affranchir d'une calibration.

La présente invention vise un procédé de mesure différent, sans calibration, indépendant du milieu dans le canal, et d'une grande précision.

La présente invention propose un procédé de localisation de l'apex d'un canal radiculaire d'une dent et/ou de mesure de la distance canalaire au moyen de la mesure des variations des constantes de temps des résistances/capacités rencontrées, entre une électrode tel une lime de dentiste insérée dans le canal radiculaire, et une seconde électrode disposée par exemple sur la muqueuse bucale du patient, caractérisé en ce que:

On applique aux bornes des électrodes un courant ou une tension continu donné.

Un signal carré de fréquence déterminée permet la répétition des mesures en temps réel créant des alternances positives et négatives.

Après amplification, on fixe l'origine des mesures sur le niveau obtenu à 0μS.

On effectue dans le temps deux mesures sur l'alternance.

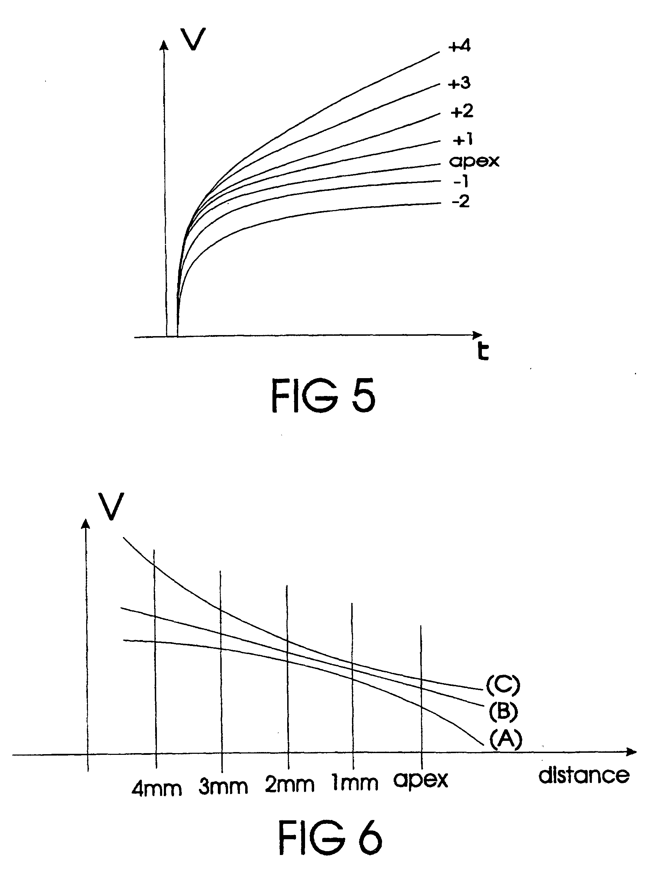

On peut noter sur les figures 5 et 6, que une mesure (A) évolue trés peu tant que la lime se trouve entre 5mm et 1.5mm, et évolue davantage dans la région de l'apex, alors que une mesure (B) évolue de manière sensiblement linéaire.

On procède à un calcul ratiomètrique des mesures (A) et (B) pour éliminer les effets perturbateurs tel que le changement de milieu, le changement de diamètre des limes;

$$M = \frac{A}{B} - K1 \qquad ou \qquad M = K1 - \frac{B}{A}$$

Les mesures élevées au carré avant le calcul du ratio donne une meilleure linéarité, en effet l'évolution du signal à mesurer étant exponentielle.

Ces formules fonctionnent pour des milieux conducteurs et très conducteurs, elles fonctionnent un peu moins bien dans des milieux peu conducteurs tel le péroxyde d'hydrogène.

Pour être moins sensible aux milieux peu conducteurs.

On effectue dans le temps trois mesures sur l'alternance. Une mesure (A) et une mesure (B) effectuée comme précédemment et une mesure (C) comme le montre les figures 5 et 6 qui évolue dans la partie entre 5mm et 0.5mm et trés peu dans la région de l'apex.

On effectue le calcul

$$M = \frac{A * C}{B * B} - K1$$

ou le calcul

$$M = K1 - \frac{B * B}{A * C}$$

Afin d'obtenir un résultat final de la distance à l'échelle souhaitée, on multiplie la valeur M par un coefficient approprié, qui représente la distance comprise entre l'extrémité distale de la lime et l'apex.

Pour les calculs ratiomètriques précédents, K1 est une constante connue et permet d'obtenir la localisation de l'apex à une valeur située au zéro de tension par exemple.

Si une mesure est faite sur l'alternance négative, il est appliqué un courant ou une tension de sens opposé. Le résultat M sera inversé.

Les mesures seront des mesures de tension aux bornes des électrodes si le signal appliqué aux électrodes est un courant.

Les mesures seront des mesures de courant traversant les électrodes si le signal appliqué aux électrodes est une tension.

Les mesures sont effectuées sur l'alternance positive et/ou l'alternance négative.

La présente invention propose également un dispositif pour la mise en oeuvre du procédé de l'invention, comportant une électrode insérée dans le canal radiculaire et une seconde électrode disposée dans la bouche, caractérisé en ce qu'il comporte, en outre:

- Des moyens pour appliquer un signal carré aux bornes des électrodes;
- Des moyens de mesure pour obtenir au moins deux valeurs de tension sur une alternance donnée;
- Des moyens de calcul et de traitement des valeurs mesurées, pour déterminer la distance entre l'extrémité distale de l'électrode insérée dans le canal et l'apex dudit canal;
- Des moyens d'affichage pour afficher ladite distance ainsi déterminée.

Avantageusement, les moyens pour appliquer un signal carré sont constitués par un générateur de courant et les mesures effectuées sont des mesures de tension aux bornes des électrodes.

La figure 1 est un schéma d'un mode de réalisation d'un dispositif de mise en oeuvre du procédé de l'invention.

La figure 2 est un graphe illustrant qualitativement la tension carré appliqué par le séquenceur.

La figure 3 est un graphe illustrant qualitativement la tension aux bornes des deux électrodes.

La figure 4 est un graphe illustrant qualitativement, sur une alternance positive, les différentes mesures effectuées.

La figure 5 est un graphe illustrant qualitativement, les variations constatées pour différentes distances séparant l'électrode de mesure de l'apex.

La figure 6 est un graphe illustrant qualitativement la variation de deux points de mesure en fonction de la distance à l'apex.

Il faut noter que les graphes décrits ci-dessus donnent simplement une information qualitative sur les signaux observés, et il ne faut y voir aucune information quantitative.

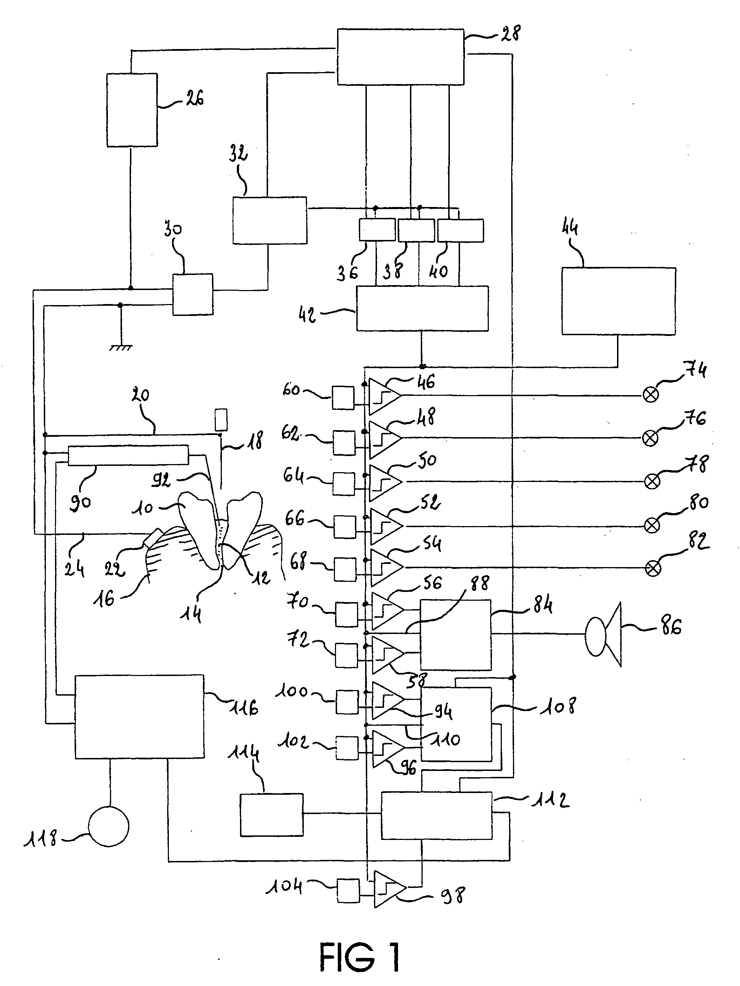

Sur la figure 1, on a représenté en coupe une dent 10 comportant un canal radiculaire 12 terminé par un apex 14, la gencive et les tissus buccaux étants représentés en 16.

Une lime endodontique 18, située dans le canal 12, est une électrode reliée à un fil conducteur souple 20 qui est relié à la masse. Une seconde électrode 22, reliée à un fil conducteur souple 24, est disposée sur la muqueuse bucale 16 du patient.

Le fil 24 est relié à un module 26 lui-même relié à un séquenceur 28 qui génère un signal carré de fréquence et d'amplitude déterminées.

Le module 26 comporte un circuit destiné à limiter l'intensité du courant quasi constant circulant par la dent du patient et à supprimer la composante continue aux bornes des électrodes 18,22. Il peut s'agir par exemple d'une résistance ohmique R élevée en série avec un condensateur de capacité C appropriée.

La tension aux bornes des électrodes 18, 22 est amplifiée et mesurée par un amplificateur 30 dont la sortie est reliée à un convertisseur analogique-numérique 32 synchronisé par le séquenceur 28.

Le convertisseur 32 est relié à trois mémoires 36, 38, 40, respectivement synchronisées par le séquenceur 28.

Les mémoires 36, 38, 40 sont reliées à une unité de calcul 42.

La sortie de l'unité 42 est reliée à un affichage numérique et/ou analogique 44 et à des comparateurs 46, 48, 50, 52, 54, 56, 58, respectivement reliés à des mémoires de comparaison 60, 62, 64, 66, 68, 70, 72.

Les comparateurs 46, 48, 50, 52, 54 sont reliés à des voyants lumineux 74, 76, 78, 80, 82, tandis que les comparateurs 56, 58 sont reliés à un modulateur 84 relié à un avertisseur sonore 86. Le modulateur 84 est également relié à la sortie du module 42, par un fil 88.

L' unité de calcul 42 est aussi reliée à des comparateurs 94,96,98, respectivement reliés à des mémoires 100, 102, 104. Les comparateurs 94, 96, sont reliés à un modulateur 108 synchronisé par le séquenceur 28. Comme le modulateur 84, le modulateur 108 est relié à la sortie de l'unité de calcul 42 par un fil 110. La sortie du modulateur 108 est relié à un commutateur de mode 112 synchronisé par le séquenceur 28.

Le commutateur de mode est relié à un sélecteur de mode 114 et au comparateur 98. La sortie du commutateur de mode 112 est relié à un régulateur de vitesse de rotation 116 comportant des moyens de réglage de vitesse 118, ledit régulateur 116 pilotant un moteur électrique 90 en rotation associé à un contre angle supportant une lime 92 à rotation continue.

Le bloc 116 peut aussi être un oscillateur ultrasonique comportant des moyens de réglage de puissance 118, ledit oscillateur 116 commandant les oscillations de la lime 92.

Le procédé de la présente invention est détaillé ci-dessous en regard du dispositif décrit ci dessus qui représente un mode de réalisation préférentiel non limitatif.

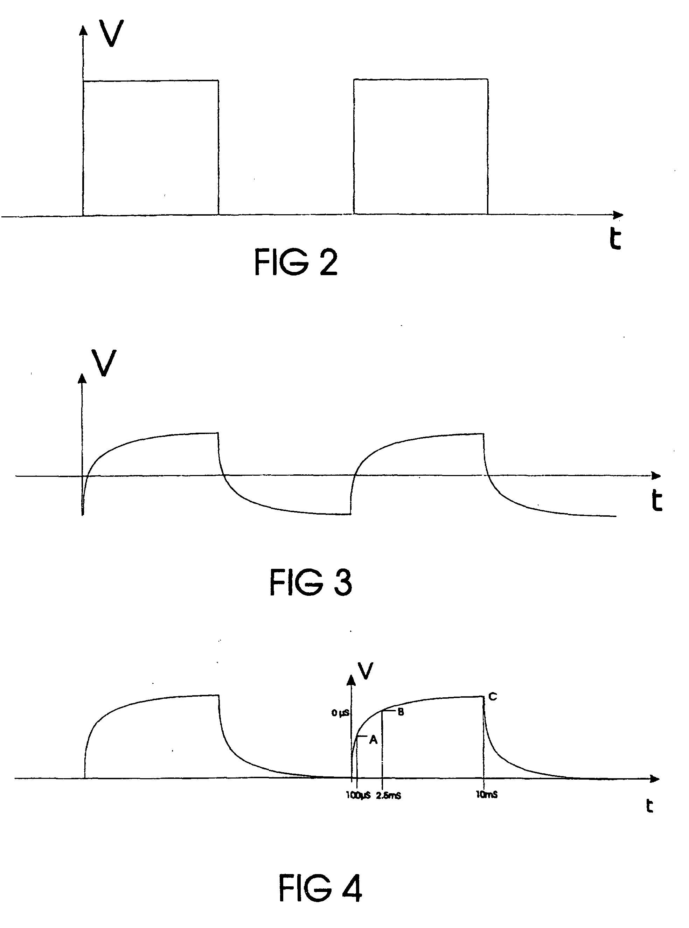

Le séquenceur 28 génère un signal carré de 50 Hertz tel que celui de la figure 2.

La tension aux bornes des électrodes 18, 22 est tel que celle de la figure 3.

Le signal obtenu aux bornes des électrodes 18, 22 est une fonction des variations des constantes de temps des résistances/capacités rencontrées dans le canal, celui-ci a une amplitude qui est liée au milieu dans lequel se trouve l'électrode 18. Entre un milieu conducteur et un milieu non conducteur, on constate que l'amplitude est plus faible dans un milieu conducteur.

On fait coincider le zéro de la mesure au front de la période du signal à 0 μsec qui est le début de l'alternance.

Comme illustré sur la figure 4 qui représente une alternance positive de la tension aux bornes des électrodes 18, 22, on effectue trois mesures de tension A, B, C, respectivement à 100 μsec 2.5 msec, 10 msec du début de l'alternance. Ces mesures sont stockées dans les mémoires 36, 38, 40.

On peut voir sur les figures 5 et 6, que la mesure A évolue trés peu dans la partie où la lime se trouve entre 5mm et 1.5mm, et évolue dans la région de l'apex, alors que une mesure C évolue dans la partie entre 5mm et 0.5mm et trés peu dans la région de l'apex. Une mesure B située à 2,5 mS évoluant sensiblement linéairement.

L'unité de calcul 42 effectue le calcul suivant:

$$M = \frac{A * C}{B * B} - K1$$

K1 est une constante obtenue expérimentalement

K1 est une constante égale à (A*C)/(B*B) lorsque l'extrémité distale de la lime est à l'apex d'une dent, ce qui donne 0 sur M.

L'ensemble reste ratiomètrique quel que soit le milieu rencontré dans le canal et du diamètre de la lime.

La linéarité est suffisante dans la plage de mesure.

Afin d'obtenir un résultat final de la distance à l'échelle souhaitée, on multiplie la valeur M par un coefficient approprié, qui représente la distance comprise entre l'extrémité distale de la lime 18 et l'apex 14.

Ce résultat final est affiché sur le module 44. Les comparateurs 46, 48, 50, 52, 54, après avoir comparé ce résultat final avec les valeurs de référence en mémoires respectives 60, 62, 64, 66, 68, actionnent le cas échéant les voyants lumineux respectifs 74, 76, 78, 80, 82.

Les comparateurs 56, 58 comparent le résultat final avec les valeurs de références en mémoires respectives 70, 72, et actionnent le cas échéant le modulateur 84 afin de générer un signal sonore approprié. Ceci permet de controler de manière visuelle et/ou sonore le rapprochement progressif de la lime 18 de l'apex 14.

Le sélecteur de mode 114 permet au dentiste de choisir entre différents modes de fonctionnement de la lime ultrasonique 92.

Par exemple, un mode de fonctionnement automatique permet d'appliquer des vibrations à la lime dès qu'elle entre en contact avec le milieu humide du canal, par comparaison avec la mémoire 104.

Par un choix approprié des valeurs consignées en mémoire 100, 102, le modulateur 108 peut également modifier le rapport cyclique de la puissance appliquée en procédant à des arrêts courts et momentanés des vibrations de la lime 92.

Par exemple, le régime des vibrations de la lime est constant tant que cette dernière est à plus de 2 mm de l'apex, correspondant à la mémoire 100, puis, à partir de 2 mm jusqu' à 1 mm, correspondant à la mémoire 102, le régime se modifie par modification du rapport cyclique, les vibrations diminuent progressivement jusqu'à s'arrêter lorsque la lime est à 1 mm de l'apex.

Un autre mode de fonctionnement actionne les vibrations en marche forcée avant l'insertion de la lime dans le canal, ce qui permet de traiter un canal calcifié ne permettant pas le fonctionnement en mode automatique.

Un autre mode actionnant les vibrations uniquement entre 2mm et 1 mm de l'apex pour éviter les faux canaux.

Afin de limiter les erreurs de mesures dues notemment à la cavitation du liquide autour de la lime, l'oscillateur 116 peut provoquer des arrêts courts et momentanés des vibrations appliquées à la lime 92, de manière synchronisée avec les mesures effectuées.

On peut remplacer la pièce à main 90 par un contre angle d'endodontie, le bloc 116 devenant un régulateur de vitesse de rotation avec une consigne de vitesse de rotation 118, des comparateurs 98, 96, et les valeurs consignées dans les mémoires 104, 102 associées provoquant la marche, l'arrêt ou l'inversion de sens du moteur du contreangle entrainant une lime en rotation continue faisant office d'électrode insérée dans le canal radiculaire de la dent.

Le sélecteur de mode 114 permet au dentiste de choisir entre différents modes de fonctionnement de la lime mise en rotation par le moteur et son contre angle.

Par exemple, un mode de fonctionnement automatique permet d'appliquer une rotation à la lime dès qu'elle entre en contact avec le milieu humide du canal, par comparaison avec la mémoire 104 et de l'arrêter par comparaison avec la mémoire 102.

Un autre mode de fonctionnement actionne la rotation en marche forcée avant l'insertion de la lime dans le canal, ce qui permet de traiter un canal calcifié ne permettant pas le fonctionnement en mode automatique.

Bien entendu, la présente invention se limite pas aux modes de réalisation décrits et représentés, mais en couvre au contraire toutes les variantes, notamment en ce qui concerne les éléments relatifs à l'exploitation des mesures effectuées.

Par exemple, le nombre de comparateurs et les valeurs consignées dans les mémoires associées peuvent être modifiés en fonctions des buts recherchés.

Les mesures sont effectuées sur l'alternance positive, mais elles peuvent également être effectuées sur l'alternance négative.

## Revendications

1. Procédé de localisation et/ou de mesure de l'apex (14) d'un canal radiculaire (12) d'une dent (10), au moyen de la mesure des variations des constantes de temps des résistances/capacités rencontrées entre une électrode de mesure tel une lime de dentiste formant la première électrode (18) insérée dans le canal radiculaire et une seconde électrode (22) disposée dans la bouche du patient au contact des tissus, **caractérisé en ce qu'**:

   - on applique aux bornes des électrodes (18, 22) un signal carré de fréquence déterminée,
   - on fixe l'origine des mesures sur le niveau obtenu au début d'une alternance soit à 0 μsec,
   - on effectue deux mesures (A) et (B) dans le temps sur l'alternance
   - on calcule le ratio des mesures (A) et (B) obtenues avec une constante K1 qui est une constante connue soit:

   $$M = \frac{A}{B} - K1 \qquad ou \qquad M = K1 - \frac{B}{A}$$

   - le résultat (M) du ratio est converti par un coefficient en une valeur qui représente la distance séparant l'extrémité distale de la lime (18) de l'apex ( 14).

2. Procédé selon la revendication 1 **caractérisé en ce que** les mesures sont élevées au carré avant le calcul du ratio.

   - On calcule le ratio du carré des mesures (A) et (B) obtenues avec une constante K1 qui est une constante connue soit:

   $$M = \frac{A * A}{B * B} - K1 \qquad ou \qquad M = K1 - \frac{B * B}{A * A}$$

3. Procédé selon la revendication 1 **caractérisé en ce que**;

   On effectue dans le temps trois mesures sur une alternance, une mesure (A) située près du début de l'alternance évolue trés peu dans la partie où la lime se trouve entre 5mm et 1.5mm, et évolue dans la région de l'apex, alors que une mesure (C) située loin du début de l'alternance évolue dans la partie entre 5mm et 0.5mm et très peu dans la région de l'apex, Une mesure (B) située entre les mesure (A) et (C).

   On effectue le calcul ratiomètrique

$$M = \frac{A * C}{B * B} - K\,1 \;;$$

où K1 est une constante connue,
ou

$$M = K1 - \frac{B * B}{A * C} \;;$$

où K1 est une constante connue.

4.  Procédé selon la revendication 1 à 3 **caractérisé en ce que** les mesures sont des mesures de la tension aux bornes des électrodes.

5.  Procédé selon la revendication 1 à 3 **caractérisé en ce que** les mesures sont des mesures du courant traversant les électrodes.

6.  Procédé selon les revendications 1 à 5, **caractérisé en ce que** les mesures sont effectuées sur une alternance positive.

7.  Procédé selon les revendications 1 à 5, **caractérisé en ce que** les mesures sont effectuées sur une alternance négative.

8.  Procédé selon les revendications 1 à 5, **caractérisé en ce que** les mesures sont effectuées indifféremment sur l'alternance positive ou négative.

9.  Procédé selon les revendications précédentes, **caractérisé en ce que** le signal appliqué a une fréquence sensiblement égale à 50 Hertz , **en ce que** l'on effectue les mesures A , B , C respectivement et sensiblement à 100 μsec, 2.5 msec 10 msec du début de l'alternance.

10. Dispositif pour la mise en oeuvre du procédé selon l'une quelconque des revendications précédentes, comportant une électrode (18) insérée dans le canal radiculaire (12) et une seconde électrode (22) disposée dans la bouche du patient, **caractérisé en ce qu'**il comporte en outre:

    -   des moyens pour appliquer un signal carré aux bornes des deux électrodes (18, 22);
    -   des moyens de mesure pour obtenir au moins deux valeurs de tension sur l'une ou l'autre alternance;
    -   des moyens pour calculer le ratio des valeurs mesurées, pour déterminer la distance entre l'extrémité distale de l'électrode insérée dans le canal et l'apex dudit canal;
    -   des moyens d'affichage pour afficher ladite distance ainsi déterminée.

11. Dispositif selon la revendication 10, **caractérisé en ce que** les moyens pour appliquer un signal carré sont constitués par un générateur à courant constant et **en ce que** les mesures de la tension sont effectuées aux bornes des électrodes(18. 22).

12. Dispositif selon les revendications 10 à 11, **caractérisé en ce que** les moyens d'affichage comportent un affichage numérique et/ou un affichage analogique.

13. Dispositif selon l'une quelconque des revendications 10 à 12, **caractérisé en ce que** les moyens d'affichage comportent au moins un comparateur délivrant un signal lumineux ou sonore lorsqu'une valeur de consigne est atteinte.

14. Dispositif selon l'une quelconque des revendications 10 à 13, **caractérisé en ce qu'** il comporte en outre, des moyens faisant varier la puissance et/ou le rapport cyclique des vibrations d'une lime ultrasonique (92) faisant office d'électrode de mesure insérée dans le canal radiculaire de la dent, par comparaison de ladite distance mesurée entre l'extémité distale de la lime et l'apex, avec les valeurs consignées dans les mémoires associées (100,102,104) , mémoires susceptibles d'être modifiées.

15. Dispositif selon l'une quelconque des revendications 10 à 13, **caractérisé en ce qu'** il comporte en outre, des moyens provoquant la marche, l'arrêt ou l'inversion de sens du moteur électrique (90) entrainant en rotation une lime ( 92) faisant office d'électrode de mesure insérée dans le canal radiculaire de la dent, par comparaison de ladite distance mesurée entre l'extrémité distale de la lime et l'apex, avec les valeurs consignées dans les mémoires associées (102, 104), mémoires susceptibles d'être modifiées.

**Patentansprüche**

1.  Verfahren zum Lokalisieren und/oder Messen der Spitze (14) eines Wurzelkanals (12) eines Zahns (10) durch Messen der Änderungen der Zeitkonstanten der Ohmschen Widerstände/der Kapazitäten, die zwischen einer Meßelektrode wie etwa einer die erste Elektrode (18) bildenden Zahnarztfeile., die in den Wurzelkanal eingeschoben ist, und einer zweiten Elektrode (22), die im Mund des Patienten in Kontakt mit dem Gewebe angeordnet ist, angetroffen werden, **dadurch gekennzeichnet, daß**

    -   an die Anschlüsse der Elektroden (18, 22) ein Rechtecksignal mit bestimmter Frequenz angelegt wird,

- der Beginn der Messungen an dem erhaltenen Pegel auf den Anfang einer Halbperiode, d. h. auf 0 μs, festgelegt wird,
- zwei Messungen (A) und (B) in der Zeit an der Halbperiode ausgeführt werden,
- das Verhältnis der erhaltenen Meßwerte (A) und (B) mit einer Konstante K1, die eine bekannte Konstante ist, gemäß

$$M = \frac{A}{B} - K1 \text{ oder } M = K1 - \frac{B}{A}$$

berechnet wird,

- das Ergebnis (M) des Verhältnisses durch einen Koeffizienten in einen Wert umgesetzt wird, der den Abstand repräsentiert, der das distale Ende der Feile (18) von der Spitze (14) trennt.

2. Verfahren nach Anspruch 1, **dadurch gekennzeichnet, daß** die Meßwerte vor der Berechnung des Verhältnisses quadriert werden,

das quadrierte Verhältnis der erhaltenen Meßwerte (A) und (B) mit einer Konstante K1, die eine bekannte Konstante ist, gemäß

$$M = \frac{A \cdot A}{B \cdot B} - K1 \text{ oder } M = K1 - \frac{B \cdot B}{A \cdot A}$$

berechnet wird.

3. Verfahren nach Anspruch 1, **dadurch gekennzeichnet, daß**:

in der Zeit an einer Halbperiode drei Messungen ausgeführt werden, wobei sich eine Messung (A) nahe am Beginn der Halbperiode in dem Teil im Bereich von 5 mm bis 1,5 mm, in dem sich die Feile befindet, sehr wenig ändert und sich in dem Bereich der Spitze ändert, eine Messung (C), die vom Beginn der Halbperiode weit entfernt ist, sich in dem Teil im Bereich von 5 mm bis 0,5 mm ändert und sich im Bereich der Spitze sehr wenig ändert und eine Messung (B), sich zwischen den Messungen (A) und (C) befindet,

die folgende ratiometrische Berechnung ausgeführt wird:

$$M = \frac{A \cdot C}{B \cdot B} - K1,$$

wobei K1 eine bekannte Konstante ist, oder

$$M = K1 - \frac{B \cdot B}{A \cdot C},$$

wobei K1 eine bekannte Konstante ist.

4. Verfahren nach Anspruch 1 bis 3, **dadurch gekennzeichnet, daß** die Messungen Messungen der Spannung an den Anschlüssen der Elektroden sind.

5. Verfahren nach Anspruch 1 bis 3, **dadurch gekennzeichnet, daß** die Messungen Messungen des Stroms sind, der durch die Elektroden fließt.

6. Verfahren nach den Ansprüchen 1 bis 5, **dadurch gekennzeichnet, daß** die Messungen an einer positiven Halbperiode ausgeführt werden.

7. Verfahren nach den Ansprüchen 1 bis 5, **dadurch gekennzeichnet, daß** die Messungen an einer negativen Halbperiode ausgeführt werden.

8. Verfahren nach den Ansprüchen 1 bis 5, **dadurch gekennzeichnet, daß** die Messungen beliebig an einer positiven oder einer negativen Halbperiode ausgeführt werden.

9. Verfahren nach den vorhergehenden Ansprüchen, **dadurch gekennzeichnet, daß** das angelegte Signal eine Frequenz hat, die im wesentlichen gleich 50 Hz ist, und daß die Messungen A, B, C im wesentlichen bei 100 μs, 2,5 ms bzw. 10 ms nach dem Beginn der Halbperiode ausgeführt werden.

10. Vorrichtung für die Ausführung des Verfahrens nach einem der vorhergehenden Ansprüche, die eine in den Wurzelkanal (12) eingeschobene Elektrode (18) und eine im Mund des Patienten angeordnete zweite Elektrode (22) umfaßt, **dadurch gekennzeichnet, daß** sie außerdem umfaßt:

- Mittel zum Anlegen eines Rechtecksignals an die Anschlüsse der zwei Elektroden (18, 22);
- Meßmittel, die wenigstens zwei Spannungswerte in der einen oder der anderen Halbperiode erhalten;
- Mittel, die das Verhältnis der gemessenen Werte berechnen, um den Abstand zwischen dem distalen Ende der in den Kanal eingeschobenen Elektrode und der Spitze des Kanals zu bestimmen;
- Anzeigemittel, die den auf diese Weise bestimmten Abstand anzeigen.

11. Vorrichtung nach Anspruch 10, **dadurch gekennzeichnet, daß** die Mittel zum Anlegen eines Rechtecksignals durch einen Konstantstromgenerator gebildet sind und daß die Messungen der Spannung an den Anschlüssen der Elektroden (18, 22) ausgeführt werden.

**12.** Vorrichtung nach den Ansprüchen 10 bis 11, **dadurch gekennzeichnet, daß** die Anzeigemittel eine digitale Anzeige und/oder eine analoge Anzeige umfassen.

**13.** Vorrichtung nach einem der Ansprüche 10 bis 12, **dadurch gekennzeichnet, daß** die Anzeigemittel wenigstens einen Komperator umfassen, der ein Lichtoder Tonsignal ausgibt, wenn ein Schwellenwert erreicht wird.

**14.** Vorrichtung nach einem der Ansprüche 10 bis 13, **dadurch gekennzeichnet, daß** sie außerdem Mittel umfaßt, die die Leistung und/oder das Tastverhältnis der Schwingungen einer Ultraschallfeile (92), die als in den Wurzelkanal des Zahns eingeschobene Meßelektrode dient, durch Vergleichen des gemessenen Abstandes zwischen dem distalen Ende der Feile und der Spitze mit Schwellenwerten in zugeordneten modifizierbaren Speichern (100, 102, 104) verändern.

**15.** Vorrichtung nach einem der Ansprüche 10 bis 13, **dadurch gekennzeichnet, daß** sie außerdem Mittel umfaßt, die den Lauf, das Anhalten oder die Richtungsumkehr des Elektromotors (90), der eine als in den Wurzelkanal des Zahns eingeschobene Meßelektrode dienende Feile (92) rotatorisch antreibt, durch Vergleichen des gemessenen Abstandes zwischen dem distalen Ende der Feile und der Spitze mit den Schwellenwerten in den zugeordneten modifizierbaren Speichern (102, 104) bewerkstelligen.

**Claims**

**1.** A method of locating and/or measuring the apex (14) of a root canal (12) in a tooth (10), by measuring variations in the time constants of the resistances/capacitances encountered in a measuring electrode such as a dental file forming the first electrode (18) inserted into the root canal and a second electrode (22) disposed in the mouth of the patient in contact with tissues, **characterised in that**:

- a square signal with a given frequency is applied to the terminals of the electrodes (18, 22),

- the origin of the measurements is fixed at the level obtained at the start of a half-cycle, that is to say at 0 μsec,

- two measurements (A) and (B) are made over time on the half-cycle,

- the ratio is calculated of the measurements (A) and (B) obtained with a constant K1 which is a known constant, that is to say:

$$M = \frac{A}{B} - K1 \text{ or } M = K1 - \frac{B}{A}$$

- the result (M) of the ratio is converted by a coefficient into a value which represents the distance separating the distal end of the file(18) from the apex (14).

**2.** A method according to claim 1, **characterised in that** the measurements are squared before calculating the ratio

- the ratio is calculated of the square of the measurements (A) and (B) obtained with a constant K1 which is a known constant, that is to say:

$$M = \frac{A * A}{B * B} - K1 \text{ or } M = K1 - \frac{B * B}{A * A}.$$

**3.** A method according to claim 1, **characterised in that**:

three measurements are made over time on one half-cycle, a measurement (A) situated close to the start of the half-cycle changes very little in the part where the file is situated between 5 mm and 1.5 mm, and changes in the region of the apex, whilst a measurement (C) situated far from the start of the half-cycle changes in the part between 5 mm and 0.5 mm and very little in the region of the apex, a measurement (B) being situated between the measurements (A) and (C);

the ratiometric calculation is made

$$M = \frac{A * C}{B * B} - K1;$$

where K1 is a known constant,
or

$$M = K1 - \frac{B * B}{A * C};$$

where K1 is a known constant.

**4.** A method according to claim 1 to 3, **characterised in that** the measurements are measurements of the voltage at the terminals of the electrodes.

**5.** A method according to claim 1 to 3, **characterised in that** the measurements are measurements of the current passing through the electrodes.

**6.** A method according to claims 1 to 5, **characterised**

**in that** the measurements are made on a positive half-cycle.

7. A method according to claims 1 to 5, **characterised in that** the measurements are made on a negative half-cycle.

8. A method according to claims 1 to 5, **characterised in that** the measurements are made either on the positive or negative half-cycle.

9. A method according to the preceding claims, **characterised in that** the signal applied has a frequency of approximately 50 hertz, and **in that** the measurements A, B and C are made respectively and substantially at 100 μsec, 2.5 msec and 10 msec from the start of the half-cycle.

10. A device for implementing the method according to any one of the preceding claims, comprising one electrode (18) inserted in the root canal (12) and a second electrode (22) disposed in the mouth of the patient, **characterised in that** it also comprises:

   - means for applying a square signal to the terminals of the two electrodes (18, 22);

   - measuring means for obtaining at least two voltage values on one or other half-cycle;

   - means for calculating the ratio of the measured values, in order to determine the distance between the distal end of the electrode inserted in the canal and the apex of said canal;

   - display means for displaying said distance thus determined.

11. A device according to claim 10, **characterised in that** the means for applying a square signal formed from a constant current generator and **in that** the measurements of the voltage are made at the terminals of the electrodes (18, 22).

12. A device according to claims 10 to 11, **characterised in that** the display means comprises a digital display and/or an analogue display.

13. A device according to any one of claims 10 to 12, **characterised in that** the display means comprises at least one comparator delivering a light or audible signal when a set value is reached.

14. A device according to any one of claims 10 to 13, **characterised in that** it also comprises means for varying the power and/or the cyclic ratio of the vibrations of an ultrasonic file (92) serving as a measuring electrode inserted in the root canal of the tooth, by comparing said distance measured between the distal end of the file and the apex with the values recorded in the associated memories (100, 102, 104), memories able to be modified.

15. A device according to any one of claims 10 to 13, **characterised in that** it also comprises means for causing the starting, stopping or reversal of direction of the electric motor (90) driving in rotation a file (92) serving as a measuring electrode inserted in the root canal of the tooth, by comparing said distance measured between the distal end of the file and the apex, with the values recorded in the associated memories (102, 104), memories able to be modified.

FIG 1

FIG 2

FIG 3

FIG 4

FIG 5

FIG 6